# EUROPEAN PATENT APPLICATION

(11) **EP 3 722 622 A1**
(43) Date of publication of application: **14.10.2020**
(21) Application number: 19382262.4
(22) Date of filing: 09.04.2019
(51) Int. Cl.: F16B 21/08, B60R 13/02, F16B 5/06, F16B 21/02

(54) **FASTENING ELEMENT**

(71) Applicant: Illinois Tool Works Inc., Glenview, IL 60026 (US)
(72) Inventor: Arteta, Javier, 08520 Barcelona (ES); Ventallo Sabater, Josep, 08520 Barcelona (ES)
(74) Representative: HGF

(57) **Abstract**

The fastening element comprises a central body (1) defining a longitudinal axis and said central body (1) comprises at least two elastic legs (2) which are displaced from said longitudinal axis, wherein each elastic leg (2) extends along substantially the whole length of the central body (1).

It permits to provide a fastening element that can be placed in its use position as quick as possible not using any tool, avoiding also insertion mistakes.

## Description

The present invention refers to a fastening element, that is inserted in a hole formed in a plate.

### Background of the invention

It is very common the use of fastening elements that are fastened to a sheet, e.g. a metal sheet in a vehicle.

These fastening elements usually are inserted inside a hole made in a sheet and then they are rotated into their use fastened position, e.g. rotating the fastening element 1/4 or 1/8 of turn.

One example of said fastening elements is disclosed in EP 1 447 575 A1. This document discloses a grommet of plastic material adapted to be inserted into an opening of a sheet-like support member, with the opening deviating from a circle, the grommet comprising a shank having an inner axial receiving bore for an element having an outer thread and snapping means on the outer circumference which cooperate with an edge of the receiving opening.

It is clear that in a vehicle the number of this kind of fastening elements is very high and it is positioning in the use fastened position should be as quick as possible.

Currently known solutions of this kind of fastening elements need the use of a tool for rotating the fastening element to its use position.

Therefore, the use of a tool means that the operator needs some time to place all these fastening elements, which involves an increase in the costs for manufacturing the vehicle.

Therefore, one purpose of the present invention is to provide a fastening element that can be placed in its use position as quick as possible not using any tool, avoiding also insertion mistakes.

### Description of the invention

With the fastening element according to the present invention it is possible to solve said drawbacks, providing other advantages that are described below.

The fastening element according to the present invention comprises a central body defining a longitudinal axis, and wherein the central body comprises at least two elastic legs which are displaced from said longitudinal axis.

Advantageously said two elastic legs are placed in symmetrical positions with respect to the longitudinal axis.

According to a preferred embodiment, each elastic leg extends along substantially the whole length of the central body, and the elastic legs are preferably placed in corresponding notches of the central body.

Furthermore, the central body comprises preferably at least two slots placed at one of the ends of said central body, and said slots extend perpendicular with respect to the longitudinal axis of the central body.

Each slot also has an internal surface that is inclined with respect to a pressing area of the central body.

Preferably, the cross-section of the central body has a substantially polygonal shape, such as, e.g. a quadrangular shape.

Advantageously, and for facilitating the insertion of the fastening element in a hole formed in a sheet, each elastic leg is wider at one of its ends that at the other end.

Furthermore, each elastic leg defines a plane, said plane being displaced with respect to the longitudinal axis of the central body.

Advantageously, one end of each elastic leg is at the same height of the central body than one edge of said slots.

In the fastening element according to the present invention, each elastic leg is advantageously in contact with an upper portion of the central body.

According to a preferred embodiment, each elastic leg has a curved shape and/or comprises at least one hole.

The main advantages provided by the fastening element according to the present invention with respect to conventional fastening elements are the following:
- Ergonomic assembly, push-in is very simple
- Turning of the part makes that the hole of the metal is always in the correct position before screwing
- Avoidance of insertion mistakes
- High sound notification of correct assembly
- High pull-out force

### Brief description of the drawings

For a better understanding the above explanation and for the sole purpose of providing an example, some non-limiting drawings are included that schematically depict a practical embodiment.
Figure 1 is a perspective view of the fastening element according to the present invention;
Figures 2-4 are elevation views of the fastening element according to the present invention during its insertion process;
Figures 5-7 are plan views of the fastening element according to the present invention during its insertion process, corresponding respectively to Figures 2-4;
Figure 8 is a section view showing the geometry of a slot;
Figure 9 is a perspective view showing upper portion of the elastic leg;
Figure 10-12 are perspective views showing several possible different configurations of the elastic leg;
Figure 13-14 are perspective views of the fastening element comprising three and four elastic legs; and
Figure 15 is a perspective view of the fastening element according to the present invention working as a panel clip.

### Description of a preferred embodiment

The fastening element according to the present invention is designed to be inserted in a hole provided in a sheet, such as a metal sheet, e.g. in a vehicle.

The fastening element comprises a central body 1 that is inserted inside the hole and an abutment body 5 provided at one end of the central body 1 and that abuts the sheet when the fastening element is placed in its use position.

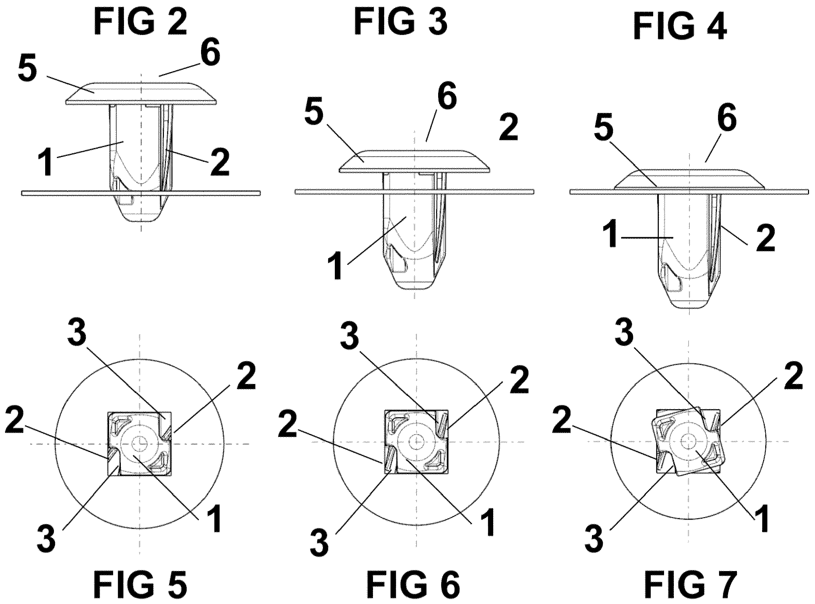

The central body 1 defines a longitudinal axis, which matches with the insertion direction of the fastening element and the cross-section of said central body 1 is substantially polygonal, e.g. square, as shown in Figs. 5-7, except for the presence of notches 3 in e.g. two of their corners, according to the shown embodiment.

At each notch 3 it is placed an elastic leg 2, that extends longitudinally along substantially the whole length of the central body 1.

As shown in Figs. 5-7, said elastic legs 2 are displaced from said longitudinal axis of the central body 1, and also the plane defined by each elastic leg 2 is displaced from said longitudinal axis.

For facilitating the insertion of the elastic legs 2 inside the hole, the elastic legs 2 are wider at one end than at the other, i.e. the elastic legs 2 are narrower at their proximal end according to the insertion direction.

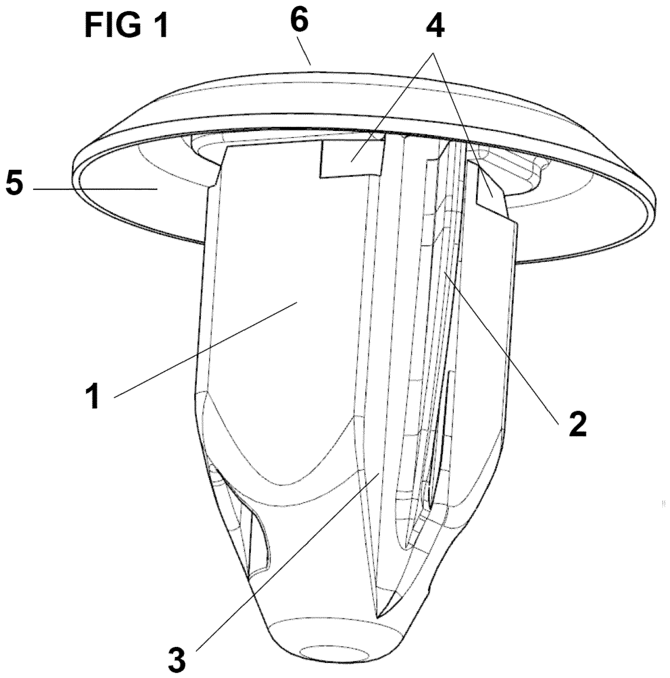

The central body 1 also comprises at least two slots 4, that are placed at the end of the central body 1 that is proximal to the abutment body 5, and one end of each elastic leg 2 is at the same height of the central body 1 than one edge of said slots 4, as shown in Fig. 1.

The insertion process of the fastening element according to the present invention inside a hole in a sheet is the following:
First, a vertical force is applied, according to the position shown in Fig. 2, for inserting the central body 1 inside the hole.

When the central body 1 contacts the hole (Fig. 3), the elastic legs 2 bend backwards (arrows in Fig. 5) and make a force to the walls of the hole, making a torque (arrows in Fig. 6) due to the distance between the elastic legs 2 and the longitudinal axis of the central body 1.

As the cross-section of the central body 1 and the hole have the same (or similar) shape, the central body 1 cannot turn until the sheet arrives to the slots 4 (Fig. 4), and then the central body 1 rotates, e.g. 1/8 of turn (Fig. 7).

If there is not any external turning force that blocks the central body 1, the elastic legs 2 are in contact with hole, so they prevent the disassembly of the fastening element.

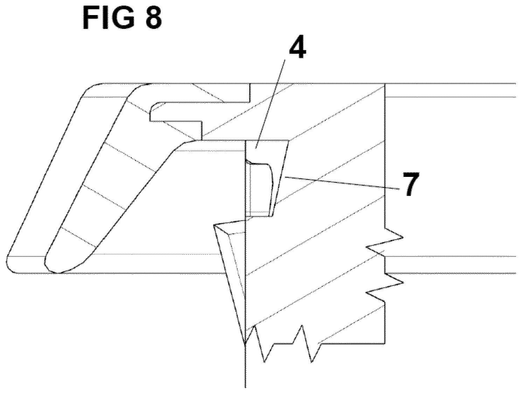

As shown in Fig. 8, each slot 4 preferably has an internal surface 7 that is inclined with respect to a pressing area 6 of the central body 1.

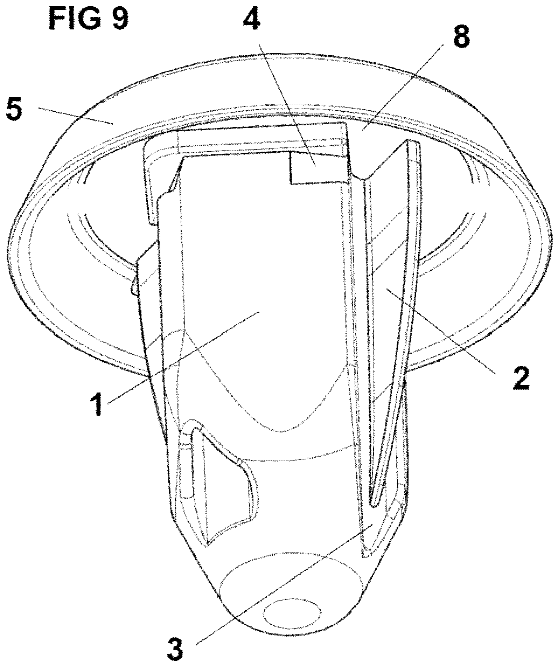

Furthermore, each elastic leg 2 can be in contact with an upper portion 8 of the central body 1, shown in Fig. 9.

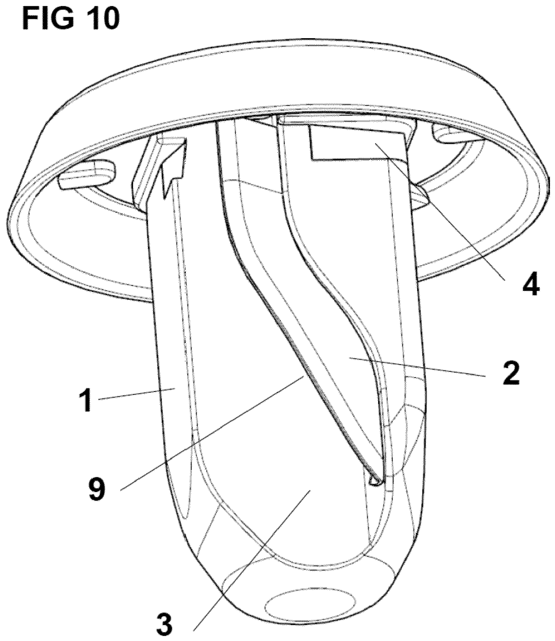

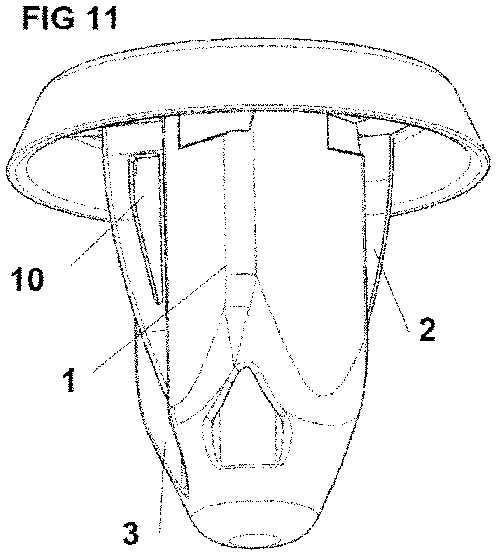

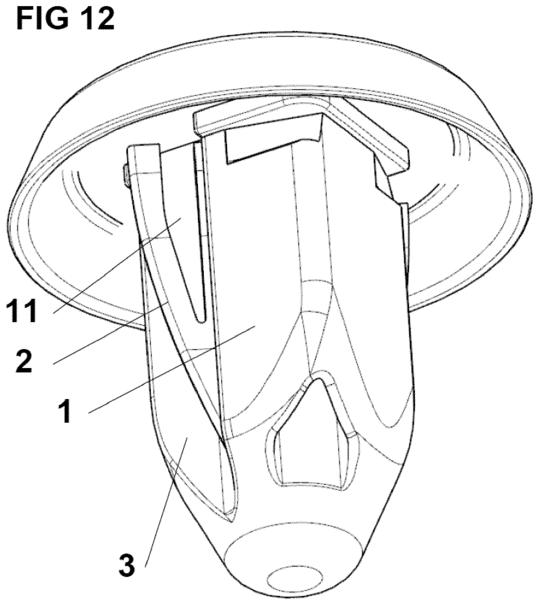

Figs. 10-12 show the curved shaped of each elastic leg 2 and can comprise one hole 10.

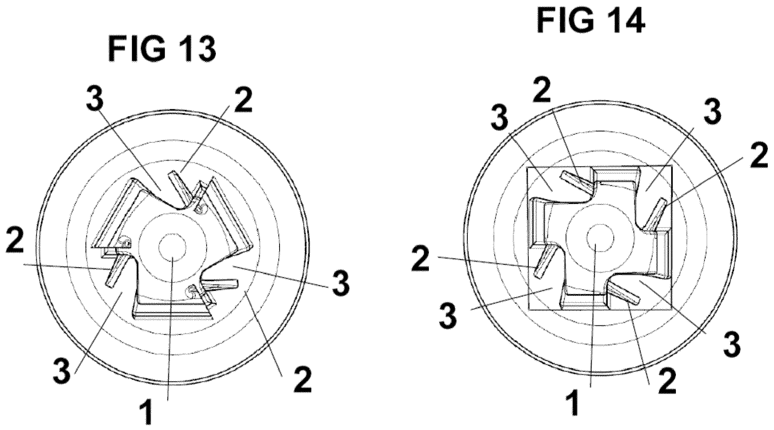

It must be pointed out that the number of elastic legs 2 can be any suitable number, such as, e.g. three or four, shown in Figs. 13 and 14, respectively.

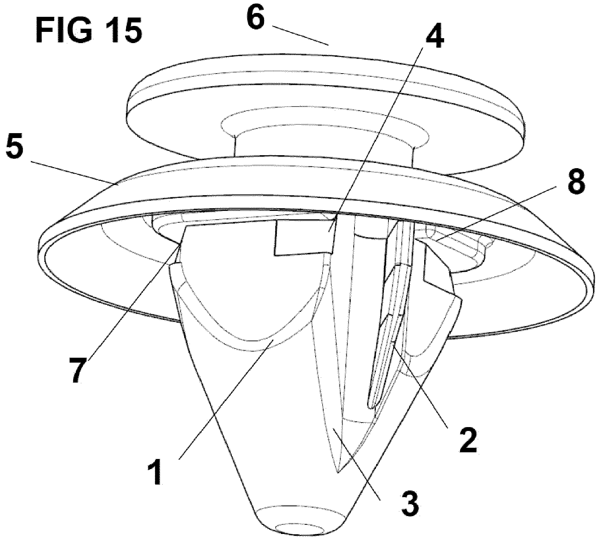

Finally, Fig. 15 shows the fastening element according to the present invention working as a panel clip.

Even though reference has been made to a specific embodiment of the invention, it is obvious for a person skilled in the art that the fastening element described herein is susceptible to numerous variations and modifications, and that all of the details mentioned can be substituted for other technically equivalent ones without departing from the scope of protection defined by the attached claims.

## Claims

1. Fastening element comprising a central body (1) defining a longitudinal axis, **characterized in that** the central body (1) comprises at least two elastic legs (2) which are displaced from said longitudinal axis.

2. Fastening element according to claim 1, wherein each elastic leg (2) extends along substantially the whole length of the central body (1).

3. Fastening element according to claim 1, wherein the elastic legs (2) are placed in corresponding notches (3) of the central body (1).

4. Fastening element according to claim 1, wherein the central body (1) comprises at least two slots (4) placed at one of the ends of said central body (1).

5. Fastening element according to claim 4, wherein said slots (4) extend perpendicular with respect to the longitudinal axis of the central body (1).

6. Fastening element according to claims 4, wherein each slot (4) has an internal surface (7) that is inclined with respect to a pressing area (6) of the central body (1).

7. Fastening element according to claim 1, wherein the cross-section of the central body (1) has a substantially polygonal shape.

8. Fastening element according to anyone of claims 1-4, wherein each elastic leg (2) is wider at one of its ends that at the other end.

9. Fastening element according to anyone of the previous claims, wherein each elastic leg (2) defines a plane, said plane being displaced with respect to the longitudinal axis of the central body (1).

10. Fastening element according to claim 4, wherein one end of each elastic leg (2) is at the same height of the central body (1) than one edge of said slots (4).

11. Fastening element according to claim 1, wherein each elastic leg (2) is in contact with an upper portion (8) of the central body (1).

12. Fastening element according to claim 1, wherein each elastic leg (2) has a curved shape.

13. Fastening element according to claim 1, wherein each elastic leg (2) comprises at least one hole (10).
